# EUROPEAN PATENT SPECIFICATION

(11) **EP 4 393 841 B1**
(45) Date of publication and mention of the grant of the patent: **06.05.2026**
(21) Application number: 23218395.4
(22) Date of filing: 20.12.2023
(51) Int. Cl.: B65D 81/113, B65D 81/05, B65D 85/68

(54) **PACKAGING BASE**
VERPACKUNGSBASIS
BASE D'EMBALLAGE

(30) Priority: 27.12.2022 SI 202200244
(43) Date of publication of application: 03.07.2024
(73) Proprietor: Gorenje gospodinjski aparati, d.o.o., 3320 Velenje (SI)
(72) Inventor: Radojicic, Radoje, 3325 Sostanj (SI); Nikolovski, Vladimir, 14104 Valjevo (RS); Lemovec, Anze, 8000 Novo mesto (SI); Kreft, Zan, 4274 Zirovnica (SI)
(74) Representative: Sveticic, Andrej

(56) References cited:
- CN-B- 102 275 666
- CN-U- 206 599 066

## Description

### Field of Invention

The invention relates to a packaging base for household appliances such as a refrigerator, dishwasher, cooker, etc.

### Prior art

The purpose of the packaging base for household appliances is to protect the household appliance from shocks during transport and handling of the household appliance on the way from the production line to the end customer, i.e. to the place of operation of the household appliance. The function of the packaging base is therefore to resist static and dynamic compressive loads and to provide a certain elasticity. A further function to be fulfilled by the packaging base is to protect the household appliance against possible ground moisture.

The prior art document CN 20426681U discloses a packaging base for a refrigerator formed from an expanded polystyrene (EPS) supporting element and elastic cushioning elements. This base fulfils the above tasks well and is of low mass. However, its disadvantage is rather limited recyclability of expanded polystyrene. It can be ground and added to new EPS as an additive and compressed into new products. However, end customers often dispose of the packaging base in residual municipal waste after transporting the household appliance. The EPS decomposition process in landfill is slow and releases toxic substances into the environment.

Document WO2022248010A1 is also known from prior art. It discloses a packaging base on which a household appliance can be arranged, comprising a tray having a bottom wall and lateral walls and two or more cushioning elements arranged in said tray and adapted to at least partially bear the weight of the household appliance and to protect from impacts a bottom region of the household appliance loaded on them. The packaging base further comprises a positioning element housed in the tray and removably coupled to said cushioning elements in such a way to keep them in a prefixed working position in which they at least partially bear the weight of the household appliance, when said household appliance is loaded on said packaging base. The packaging base may further comprise a load-bearing element. A disadvantage of said packaging base is its large number of elements of complex shapes, which has a negative impact on production costs.

The document CN 102 275 666 B shows packaging base comprising a Polyethylene strip edging, surrounding wood boards respectively adhered to the upper and lower sides of the honeycomb paperboard.

### Technical problem

The technical problem is how to provide a packaging base for household appliances that has adequate mechanical strength, elasticity to compensate for minor impacts, capability to plastically deform in the event of major impacts, provides protection against ground moisture and is environmentally friendly and fully recyclable. Furthermore, the invention aims to provide a simple packaging base with low production costs.

### Solution to the technical problem

The relative terms such as lower, upper etc. are defined depending on the orientation of the packaging base in the working position, that is the position in which it can receive a household appliance.

The technical problem is solved by a packaging base for household appliances such as a refrigerator, dishwasher, cooker, etc., defined in claim 1, comprising:
a polypropylene tray comprising a quadrangular bottom and four peripheral lateral walls rising vertically from the bottom,
a wood panel arranged at the bottom of the tray so that it essentially fully covers the bottom of the tray, and
at least a single-layer honeycomb paperboard arranged in the tray over the wood panel and comprising a honeycomb core and two mutually parallel layers of paperboard glued to the honeycomb core on a respective side of the core, the honeycomb walls being oriented in a vertical direction.

The advantage of the packaging base for household appliances according to the invention over known bases is that all components can be easily separated and recycled, while the base is lightweight, provides adequate mechanical strength, elasticity to absorb minor shocks and vibrations, and deforms plastically in the event of major impacts, thus protecting the household appliance from mechanical damage and possible failure, and offering protection against ground moisture and possible water. The packaging base according to the invention is simple and ensures low production costs.

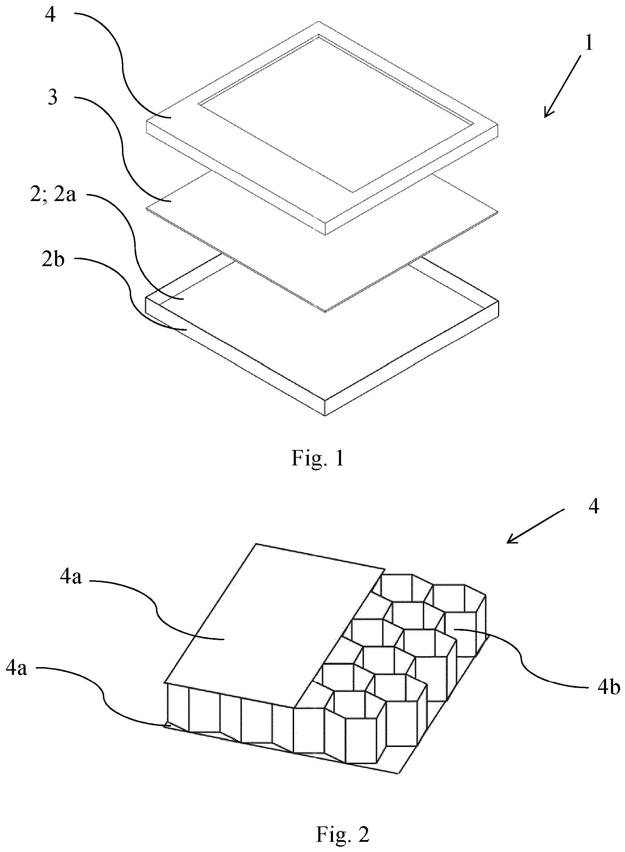

Figure 1: Packaging base components
Figure 2: Honeycomb paperboard with the top paperboard layer partially removed

The invention is described in more detail hereinbelow.

The technical problem is solved by a packaging base 1 for household appliances such as a refrigerator, dishwasher, cooker, etc., comprising:
a polypropylene tray 2 comprising a quadrangular bottom 2a and four peripheral lateral walls 2b rising vertically from the bottom,
a wood panel 3 arranged at the bottom of the tray so that it essentially fully covers the bottom of the tray, and
at least a single-layer honeycomb paperboard 4 arranged in the tray over the wood panel and comprising a honeycomb core and two mutually parallel layers 4a of paperboard glued to the honeycomb core 4b on a respective side of the core, the honeycomb walls being oriented in a vertical direction.

The polypropylene tray is made by cutting a cross-shaped form from a sheet of polypropylene material having a core with a cellular structure. The legs of the cross are then folded to form the lateral walls, which are then heat welded together at their interfaces to form the tray. The recommended thickness of the polypropylene sheet is between 3 mm and 5 mm, preferably 4 mm. The function of the polypropylene tray is to protect the household appliance, and in particular the honeycomb paperboard and the plywood panel from ground moisture or possible water. Ground moisture and water could cause the plywood panel to swell and warp and the honeycomb paperboard to lose its mechanical strength completely and to collapse under the weight of the household appliance, thus losing its primary function.

The honeycomb paperboard of the packaging base for household appliances is resistant to static and dynamic compressive loads generated during the transport, handling and storage of the household appliance. The honeycomb core with honeycomb cells oriented in the vertical direction acts as a shock absorber and vibration damper. It absorbs the transmission of shocks to the household appliance, thus preventing any mechanical damage and failure of the household appliance, in particular during handling and transport of the household appliance. The honeycomb paperboard may be plastically deformed in the event of severe impacts. The recommended compressive strength of the honeycomb paperboard should be at least 5 kg/cm². The honeycomb paperboard of the packaging base may comprise one or more recesses on its upper side. The recesses in the honeycomb paperboard are produced by a die-cutting process. A die-cutting tool, which has the negative shape of the desired recess, first cuts into the top layer of the honeycomb paperboard with its sharp edge and then compresses and thereby plastically deforms the honeycomb core to the desired depth. It is recommended that the height of the recess does not exceed 70% of the total height of the honeycomb paperboard. Preferably, the height of the recess is between 20% and 30% of the total height of the honeycomb paperboard, in particular 25% of the total height of the honeycomb paperboard. The recommended height of the honeycomb paperboard is between 30 mm and 50 mm, preferably 40 mm. The packaging base may further comprise a two- or multi-layer honeycomb paperboard, as in this case it is possible to achieve that only one layer of the honeycomb core of the honeycomb paperboard is plastically deformed during the manufacture of the recess. One or more layers that remain undeformed provide the household appliance with better stability when the appliance is arranged on the packaging base.

The wood panel acts as a load distributor and gives the packaging base the necessary mechanical strength, which is particularly important when handling a household appliance. The wood panel distributes the forces exerted by the legs of the appliance on the honeycomb paperboard evenly over the entire surface of the panel. The wood panel also protects the honeycomb paperboard against mechanical damage caused, for example, by conveyor belts which are arranged under the packaging base during the transport of the household appliance. The wood panel may be selected from a group comprising: plywood, particleboard and medium-density fibreboard made of wood fibres with the addition of resin or synthetic glue, also called a medium-density fibreboard (MDF). The recommended thickness of the wood panel is between 3 mm and 8 mm, preferably 6 mm. The recommended flexural strength of the wood panel is between 90 N/mm² and 133 N/mm².

## Claims

1. A packaging base (1) for household appliances such as a refrigerator, dishwasher, cooker, etc., comprising:
- a polypropylene tray (2) comprising a quadrangular bottom (2a) and four peripheral lateral walls (2b) rising vertically from the bottom,
- a wood panel (3) arranged at the bottom of the tray so that it essentially fully covers the bottom of the tray, and
- at least a single-layer honeycomb paperboard (4) arranged in the tray over the wood panel and comprising a honeycomb core and two mutually parallel layers (4a) of paperboard glued to the honeycomb core (4b) on a respective side of the core, the honeycomb walls being oriented in a vertical direction.

2. The packaging base according to claim 1, **characterized in that** the honeycomb paperboard comprises one or more recesses on its upper side.

3. The packaging base according to claim 2, **characterized in that** the height of the recess does not exceed 70% of the total height of the honeycomb paperboard.

4. The packaging base according to claim 3, **characterized in that** the height of the recess is between 20% and 30% of the total height of the honeycomb paperboard, in particular 25% of the total height of the honeycomb paperboard.

5. The packaging base according to any of the previous claims, **characterized in that** the height of the honeycomb paperboard is between 30 mm and 50 mm, preferably 40 mm.

6. The packaging base according to any of the previous claims, **characterized in that** the compressive strength of the honeycomb paperboard is 5 kg/cm².

7. The packaging base according to any of the previous claims, **characterized in that** the honeycomb paperboard is a two- or multi-layer honeycomb paperboard.

8. The packaging base according to any of the previous claims, **characterized in that** the polypropylene tray has a cellular structure.

9. The packaging base according to any of the previous claims, **characterized in that** the polypropylene tray is made of a panel having a thickness of 3 mm to 5 mm, preferably 4 mm.

10. The packaging base according to any of the previous claims, **characterized in that** the wood panel is selected from a group comprising: plywood, particleboard and medium-density fibreboard made of wood fibres with the addition of resin or synthetic glue, also called a medium-density fibreboard (MDF).

11. The packaging base according to any of the previous claims, **characterized in that** the thickness of the wood panel is between 3 mm and 8 mm, preferably 6 mm.

12. The packaging base according to any of the previous claims, **characterized in that** the flexural strength of the wood panel is between 90 N/mm² and 133 N/mm².

## Patentansprüche

1. Verpackungsbasis (1) für Haushaltsgeräte wie Kühlschrank, Geschirrspüler, Herd usw., umfassend:
- eine Polypropylenschale (2), umfassend einen viereckigen Boden (2a) und vier äußere Seitenwände (2b), die senkrecht vom Boden aufragen;
- eine Holzplatte (3), die am Boden der Schale so angeordnet ist, dass sie den Boden der Schale im Wesentlichen vollständig bedeckt, und
- mindestens eine einlagige Wabenpappe (4), die in der Schale über der Holzplatte angeordnet ist und einen Wabenkern und zwei einander parallele Lagen (4a) von Pappe umfasst, die jeweils auf einer Seite des Kerns (4b) mit Pappe verklebt sind, wobei die Wabenwände vertikal ausgerichtet sind.

2. Verpackungsbasis nach Anspruch 1, **dadurch gekennzeichnet, dass** die Wabenpappe auf ihrer Oberseite eine oder mehrere Aussparungen aufweist.

3. Verpackungsbasis nach Anspruch 2, **dadurch gekennzeichnet, dass** die Höhe der Aussparung 70 % der Gesamthöhe der Wabenpappe nicht überschreitet.

4. Verpackungsbasis nach Anspruch 3, **dadurch gekennzeichnet, dass** die Höhe der Aussparung zwischen 20 % und 30 % der Gesamthöhe der Wabenpappe, insbesondere 25 % der Gesamthöhe der Wabenpappe, beträgt.

5. Verpackungsbasis nach einem der vorhergehenden Ansprüche, **dadurch gekennzeichnet, dass** die Höhe der Wabenpappe zwischen 30 mm und 50 mm, vorzugsweise 40 mm, beträgt.

6. Verpackungsbasis nach einem der vorhergehenden Ansprüche, **dadurch gekennzeichnet, dass** die Kompressionsfestigkeit der Wabenpappe 5 kg/cm² beträgt.

7. Verpackungsbasis nach einem der vorhergehenden Ansprüche, **dadurch gekennzeichnet, dass** die Wabenpappe zweischichtig oder mehrschichtig ist.

8. Verpackungsbasis nach einem der vorhergehenden Ansprüche, **dadurch gekennzeichnet, dass** die Polypropylenschale eine Zellstruktur aufweist.

9. Verpackungsbasis nach einem der vorhergehenden Ansprüche, **dadurch gekennzeichnet, dass** die Polypropylenschale aus einer Platte mit einer Dicke von 3 mm bis 5 mm, vorzugsweise 4 mm, angefertigt ist.

10. Verpackungsbasis nach einem der vorhergehenden Ansprüche, **dadurch gekennzeichnet, dass** die Holzplatte aus einer Gruppe ausgewählt ist, umfassend Sperrholz, Spanplatte und mitteldichte Faserplatte, die aus Holzfasern mit Zusatz von Harz oder Kunstleim angefertigt wird, auch mitteldichte Faserplatte (MDF) genannt.

11. Verpackungsbasis nach einem der vorhergehenden Ansprüche, **dadurch gekennzeichnet, dass** die Dicke der Holzplatte zwischen 3 mm und 8 mm, vorzugsweise 6 mm, beträgt.

12. Verpackungsbasis nach einem der vorhergehenden Ansprüche, **dadurch gekennzeichnet, dass** die Biegefestigkeit der Holzplatte zwischen 90 N/mm² und 133 N/mm² liegt.

## Revendications

1. Base d'emballage (1) pour appareils ménagers tels qu'un réfrigérateur, un lave-vaisselle, une cuisinière, etc., comprenant :
- un plateau en polypropylène (2) comportant un fond quadrangulaire (2a) et quatre parois latérales périphériques (2b) s'élevant verticalement à partir du fond,
- un panneau de bois (3) disposé au fond du plateau de manière à recouvrir essentiellement entièrement le fond du plateau, et
- au moins un carton alvéolaire monocouche (4) disposé dans le plateau au-dessus du panneau de bois et comprenant une âme alvéolaire et deux couches parallèles (4a) de carton collées à l'âme alvéolaire (4b) sur un côté respectif de l'âme, les parois alvéolaires étant orientées dans une direction verticale.

2. Base d'emballage selon la revendication 1, **caractérisée en ce que** le carton alvéolaire présente un ou plusieurs évidements sur sa face supérieure.

3. Base d'emballage selon la revendication 2, **caractérisée en ce que** la hauteur de l'évidement ne dépasse pas 70 % de la hauteur totale du carton alvéolaire.

4. Base d'emballage selon la revendication 3, **caractérisée en ce que** la hauteur de l'évidement est comprise entre 20 % et 30 % de la hauteur totale du carton alvéolaire, en particulier 25 % de la hauteur totale du carton alvéolaire.

5. Base d'emballage selon l'une quelconque des revendications précédentes, **caractérisée en ce que** la hauteur du carton alvéolaire est comprise entre 30 mm et 50 mm, de préférence 40 mm.

6. Base d'emballage selon l'une quelconque des revendications précédentes, **caractérisée en ce que** la résistance à la compression du carton alvéolaire est de 5 kg/cm².

7. Base d'emballage selon l'une quelconque des revendications précédentes, **caractérisée en ce que** le carton alvéolaire est un carton alvéolaire bicouche ou multicouche.

8. Base d'emballage selon l'une quelconque des revendications précédentes, **caractérisée en ce que** le plateau en polypropylène a une structure alvéolaire.

9. Base d'emballage selon l'une quelconque des revendications précédentes, **caractérisée en ce que** le plateau en polypropylène est constitué d'un panneau ayant une épaisseur de 3 mm à 5 mm, de préférence de 4 mm.

10. Base d'emballage selon l'une quelconque des revendications précédentes, **caractérisée en ce que** le panneau de bois est choisi dans un groupe comprenant : le contreplaqué, le panneau de particules et le panneau de fibres de densité moyenne fait de fibres de bois avec addition de résine ou de colle synthétique, également appelé panneau de fibres de densité moyenne (MDF).

11. Base d'emballage selon l'une quelconque des revendications précédentes, **caractérisée en ce que** l'épaisseur du panneau de bois est comprise entre 3 mm et 8 mm, de préférence 6 mm.

12. Base d'emballage selon l'une quelconque des revendications précédentes, **caractérisée en ce que** la résistance à la flexion du panneau de bois est comprise entre 90 N/mm² et 133 N/mm².
